# EUROPEAN PATENT SPECIFICATION

(11) **EP 0 415 655 B1**
(45) Date of publication and mention of the grant of the patent: **08.05.1996**
(21) Application number: 90309267.4
(22) Date of filing: 23.08.1990
(51) Int. Cl.: G08C 19/16, G08C 19/02, G08C 25/02

(54) **Two-wire power and position control system**
Zweidraht-Leistungs- und -Positionssteuerungssystem
Système de commande de puissance et de position à deux fils

(30) Priority: 01.09.1989 US 401687
(43) Date of publication of application: 06.03.1991
(73) Proprietor: Honeywell Limited-Honeywell Limitee, North York Ontario, M2H 3N7 (CA)
(72) Inventor: Ho, Kwok-chuen, Scarborough, Ontario (CA); Tong, Chi-shing, Scarborough, Ontario (CA); Vepy, Tamas A., Willowdale, Ontario (CA)
(74) Representative: Fox-Male, Nicholas Vincent Humbert

(56) References cited:
- FR-A- 1 515 987
- FR-A- 2 374 775
- GB-A- 2 187 344

## Description

The present invention relates to two-wire power and position control systems. More specifically, the present invention is directed to a two-wire power and position control system using the two-wire connecting link for transmitting power and data.

### SUMMARY OF THE INVENTION

An object of the present invention is to provide a simple and cost effective two-wire power and position control system for transmitting power and data.

The present invention provides a two-wire power and position control system characterised by a central station means (2) having i) energizing means for providing an energizing signal comprising a series of discrete, spaced apart pulses and ii) data receiving means, a remote station means (1), a two wire connecting link (4) between said central station and said remote station, actuator means (6, 7, 7A, 7B, 37, 57) comprising a D.C. motor at said remote station connected to a physical displacement means and providing a physical displacement thereof in response to the energizing signal, a data transmitting means (6, 7, 8, 51) at said remote station comprising an electrical circuit in mechanical connection with said physical displacement means and whose electrical characteristics depend on the physical position of the physical displacement means for transmitting a data signal over said connecting link between successive of said energizing signal pulses, said data signal representative of the present electrical characteristics of the electrical circuit resulting from the physical position of said physical displacement means effected by said actuator means, whereby said energizing means at said central station means periodically energizes said motor with said energizing signal pulses applied over said connecting link and said data transmitting signal means periodically carries data representative of said physical position to said data receiving means said energising signal pulses.

In a first form, the remote station utilizes the back-EMF of a permanent magnet DC motor at the remote station as the position indicator. In a second form, the remote station utilizes a change in impedance of a voltage divider to effect a signal at the central station connected to the voltage divider circuitry over the connecting link.

FR-A-2 374 775 discloses a control system wherein the remote station shorts the power conductors. It relies on a change in torque sensed by the person operating the central station's generator. There is no "time division".

### BRIEF DESCRIPTION OF THE DRAWINGS

A better understanding of the present invention may be had when the following detailed description is read in connection with the accompanying drawings, in which:
Fig. 1 is a schematic illustration of a first novel two-wire communication system,
Fig. 2 is a waveshape diagram illustrating the operation of the system shown in Fig. 1,
Fig. 3 is a schematic illustration of a modification of the system shown in Fig. 1,
Fig. 4 is waveshape diagram illustrating the operation of the modification shown in Fig. 3,
Fig. 5 is a schematic illustration of a second novel two-wire communication system,
Fig. 6 is a waveshape diagram illustrating the operation of the system shown in Fig. 5,
Fig. 7 is schematic illustration of a modification of the system shown in Fig. 5 and
Fig. 8 is a waveshape diagram illustrating the operation of the modification shown in Fig. 7.

### DESCRIPTION OF THE PREFERRED EMBODIMENT

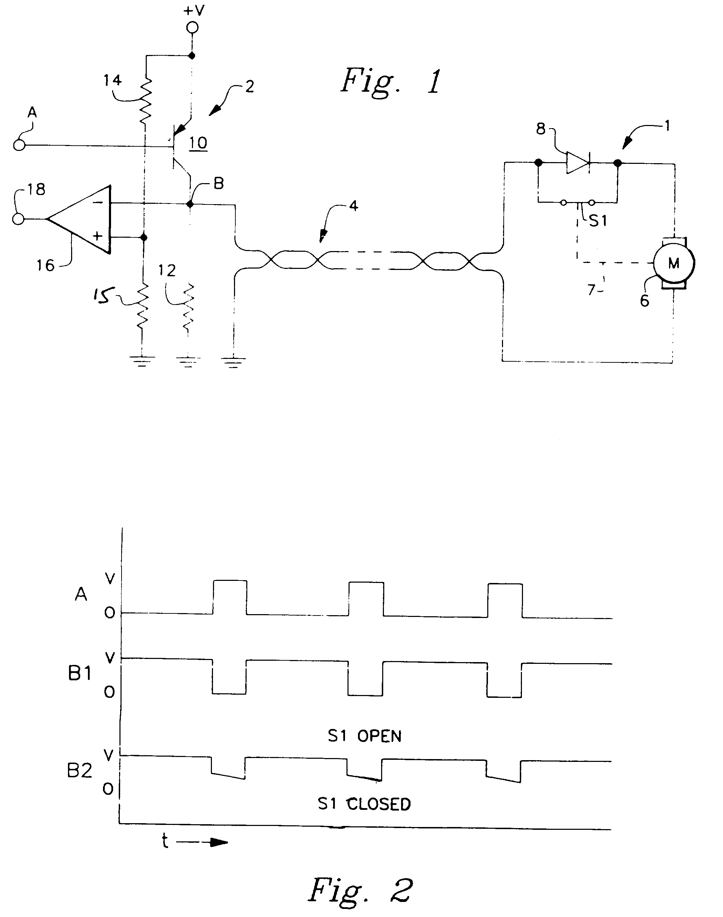

Referring to Fig. 1 in more detail, there is shown a two-wire power and position control system having a remote station 1 and a central station 2 connected by a two-wire connecting link 4. A permanent magnet DC motor 6 located at the remote station 1 is arranged by means of a mechanical linkage 7 to operate a single-pole,single-throw switch S1 arranged in parallel with a diode 8. The diode 8 is connected between a remote station end of one of the pair of wires comprising the connecting link 4 and one side of the motor 6. The other side of the motor 6 is connected to the remote station end of the other one of the pair of wires comprising the connecting link 4. At the central station 2, the connecting link 4 is connected with an end of one wire connected to a circuit ground and an end of the other wire connected to a collector of a transistor 10. The collector of the transistor 10 is also connected to the circuit ground through a first resistor 12. The emitter of the transistor 10 is connected to a source of supply voltage + V.

A voltage divider comprising a serial combination of a second resistor 14 and a third resistor 15 is connected between the supply voltage + V the circuit ground connection. A voltage comparator 16 has a non-inverting input connected to the junction between the series resistors 14, 15 and an inverting input connected to the collector of the transistor 10. An output of the voltage comparator 16 is connected to an output terminal 18. A motor energizing input A is connected to a source of energizing pulses generated by a microprocessor (not shown) and is connected to the base of the transistor 10 to supply a motor energizing signal thereto.

The system shown is Fig. 1 is effective to transmit position data representative signals from the remote station 1 to the central station 2 over the connecting link 4 indicative of the position of the actuator output. The connecting link 4 is also used to transmit the motor energizing pulses initiated at input terminal A to the motor 6. While two-wire communication systems for transmitting data and power between a central station and a remote location are well-known in the art as shown in U.S. Patent No. 3,500,132, such prior art systems have not been capable of transmitting position data as provided by the present invention. The back-EMF generated by the motor 6 between the energizing pulses transmitted over the connecting link 4 is used as a source of actuator output position data signals. The continued presence of such a back-EMF from a DC motor between energizing pulses is well-known in the art, as discussed in U.S. Patent No. 3,411,062.

As shown in Fig. 2, the actuator motor 6 energizing pulses from the energizing signal input terminal A are applied over the connecting link 4 by means of the transistor 10. Between the energizing pulses for the actuator motor 6, the effect of the mechanical linkage 7 driven by actuator motor 6 on the switch S1 is communicated back over the connecting link 4. Specifically, the effect of the actuator motor 6 on the switch S1 through the linkage is effective to produce actuator output position data at a preselected position. Thus, as shown in the waveshape diagram B1 with the switch S1 in an open or non-conducting state, the diode 8 is effective to block the back-EMF from the actuator motor 6 whereby no position data signal appears at point B in the central station during the absence of the energizing pulses. Conversely, with the switch S1 closed by the actuator motor 6, the diode 8 is bypassed, and the back-EMF appears at point B in the central station as shown in the waveshape labeled B2. These actuator output position data signals are independent from any load, temperature speed or rotation direction of the actuator motor. Accordingly, the absence or presence of the back-EMF is only controlled by the mechanically operated switch S1 to indicate the position of the actuator, i.e., whether or not the actuator has reached a position effective to operate the switch S1.

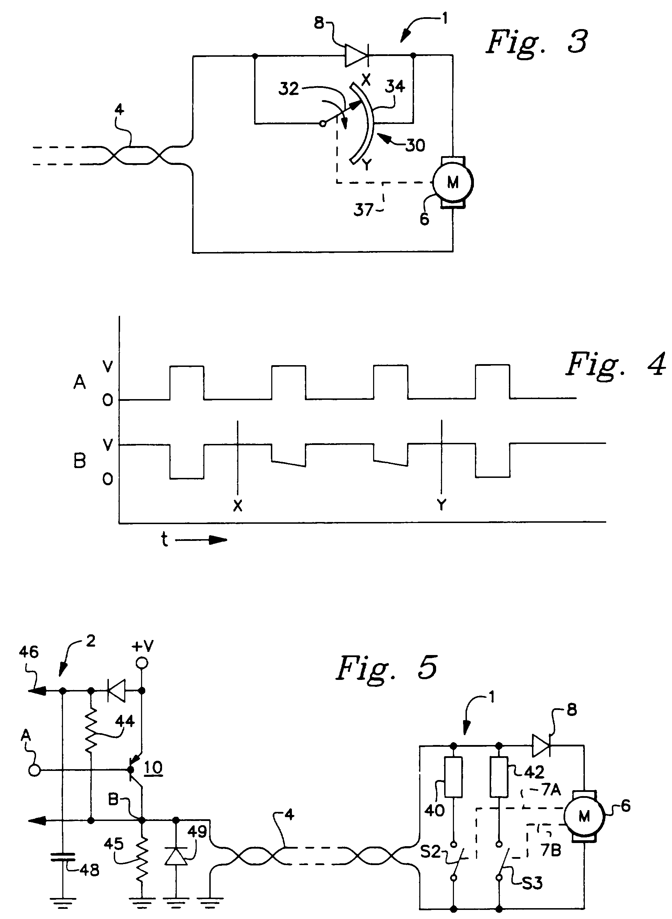

In Fig. 3, there is shown a modification of the system shown in Fig. 1 wherein the switch S1 is replaced by a sliding or rotary contact device 30 having an electrical contact between a rotary arm 32 and a fixed contact 34 extending over a substantial angle of rotation, e.g., 180°, between end points X and Y as determined by the linkage 37 driven by the actuator motor 6. Thus, as shown in the waveshape diagram of Fig. 4, the back-EMF of the actuator motor 6 is transmitted over the connecting link 4 for a period of time between the contact positions X and Y of the rotary contact device 30.

In Fig. 5, there is shown a two-wire multi-position control system having two-wire connecting link 4 between a central station 2 and a remote station 1 wherein the diode 8 at the remote station is not bypassed and is arranged to continuously block the back-EMF of the actuator motor 6. In this arrangement, a pair of impedances 40,42 are connected in series with respective ones of single-pole,single-throw switches S2,S3. Each series combination of impedance and switch is connected in parallel with the series combination of the diode 8 and the motor 6 and across the two wires of the communication link 4. The impedances 40,42 form a voltage divider by a series connection with a resistor 44 located in the central station 2. Specifically, the series combination of the resistor 44 and impedances 40,42 is connected across a reference voltage at terminal 46. A filter capacitor 48 is also connected to the reference signal terminal 46 and a circuit ground connection. A resistor 45 and a diode 49 are connected between the collector of transistor 10 to circuit ground. This resistor 45 provides a complete circuit in the event of an open circuit condition when no load is being connected to the connecting link 4. The resistor 45 should have a value of at least ten times greater than the impedance of resistors 40,42. The diode 49 is added to suppress an overshoot voltage induced during signal switching. The output from the central station 1 is obtained from the point B which is the connection between the resistor 44 at the central station 2 and the impedances 40,42 at the remote station 1. A source of motor energizing pulses is connected to energizing terminal A to be applied through transistor 10 to the motor 6 in a manner similar to that shown and discussed above with respect to Fig. 1. The motor 6 operates the switches S2,S3 through respective linkages 7A,7B.

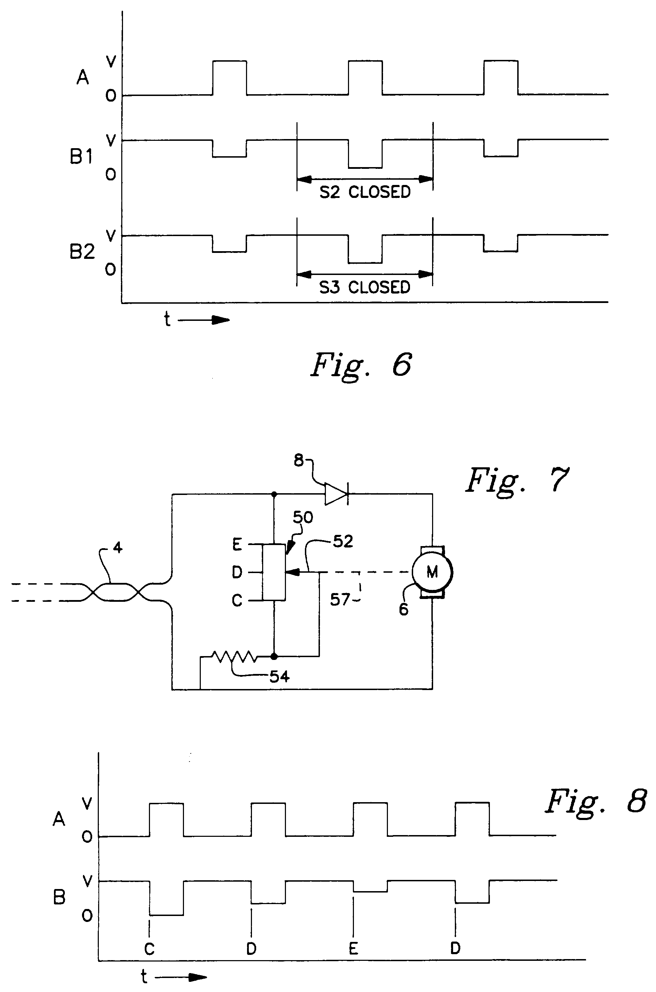

The waveforms shown in Fig. 6 illustrate the operation of the system shown in Fig. 5. As may be seen from Fig. 6, the output from terminal B is dependent on which of the impedances 40,42 are effective in the circuit, i.e., which of the switches S2,S3 is opened or closed. The switches S2,S3 are arranged to be alternately operated whereby a closure of one is only effected during a time that the other switch is open. In this circuit, it is further assumed that the impedances 40,42 are different from each other and each impedance is much greater than the motor impedance. Thus, as may be seen from Fig. 6, the impedance change by selectively closing the switches S2 and S3 is effective to produce respective outputs from point B at the remote station inasmuch as the voltage division effected by the voltage divider including impedances 40,42 is different for each of the impedances 40,42. Thus, the circuit is able to produce an output at the central station indicative of the position of the actuator output. While the illustration shown in Fig. 5 and waveshape diagram shown in Fig. 6 are directed to a system using two impedances and two switches, it is clear that more impedances of different values and corresponding series switches and motor linkages may be used to provide indications of additional positions of the actuator output at the central station 2.

In Fig. 7, there is shown a modification of the circuit shown in Fig. 2 wherein the combination of the dual impedances 40,42 and switches S2 and S3 is replaced by a variable impedance, e.g., a potentiometer, the fixed impedances 40,42 shown in Fig. 5. This rotary or variable impedance device is shown with three positions labeled C, D and E for the arm 52 driven by the actuator motor 6 through the linkage 57. A fourth resistor 54 is connected between one end of the variable impedance 50 and the circuit ground to prevent a short circuit from occurring when the variable impedance arm 52 reaches the end of its travel at the location E. Fig. 8 is a waveshape diagram illustrating the operation of the circuit shown in Fig. 7 wherein the output at the central station at point B is shown for each of the illustrated positions of the rotary arm 52. Since the impedance varies as the rotary arm 52 is moved by the motor 6, the output from the remote station amplitude signal is also a variable to indicate the corresponding position of the actuator output.

Accordingly, it may be seen that there has been provided, in accordance with the present invention, a simple and cost effective two-wire power and position control system for providing multi-position data signals representative of an actuator output position at a remote station.

## Claims

1. A two-wire power and position control system comprising:-
a central station means (2) having i) energizing means for providing an energizing signal comprising a series of discrete, spaced apart pulses and ii) data receiving means,
a remote station means (1),
a two wire connecting link (4) between said central station and said remote station,
actuator means (6, 7, 7A, 7B, 37, 57) comprising a D.C. motor at said remote station connected to a physical displacement means and providing a physical displacement thereof in response to the energizing signal,
a data transmitting means (6, 7, 8, 51) at said remote station comprising an electrical circuit in mechanical connection with said physical displacement means and whose electrical characteristics depend on the physical position of the physical displacement means for transmitting a data signal over said connecting link between successive of said energizing signal pulses, said data signal representative of the present electrical characteristics of the electrical circuit resulting from the physical position of said physical displacement means effected by said actuator means, whereby said energizing means at said central station means periodically energizes said motor with said energizing signal pulses applied over said connecting link and said data transmitting signal means periodically carries data representative of said physical position to said data receiving means between said energising signal pulses.

2. A system according to Claim 1 characterised in that said actuator means includes a motor (6) and a drive linkage (7, 7A, 7B, 37, 57) operated by said motor.

3. A systems according to Claim 2 characterised in that said data transmitting means includes a diode (8) and a switch (S1) in parallel with said diode and operated by said linkage (7, 7A, 7B, 37, 57).

4. A system according to Claim 3 characterised in that said diode (8) is poled to oppose a back-EMF of said motor (6) while passing the periodic motor energizing pulses from said energizing means (A, 10) to said motor.

5. A system according to claim 3 or 4 characterised in that said switch is a single-contact, single-throw switch (S₁, S₂, S₃).

6. A system according to Claim 3 or 4 characterised in that said switch is a rotary switch (30) having an extended electrical contact over a predetermined angle of rotation.

7. A system according to any preceding Claim characterised in that transmitting means includes a series connection of an impedance (4w, 42) and a switch (S₂, S₃) operated by said motor.

8. A system according to Claim 7 characterised in that said energizing means includes a second impedance (44) forming a series voltage divider with said first-mentioned impedance via said connecting link (4), a source of reference voltage (46) arranged to energize said voltage divider and an output means (B) connected to an impedance junction of said series voltage divider.

9. A system according to any preceding Claim characterised in that the data transmitting means includes a plurality of impedances (40, 42), and a plurality of switches (S₂, S₃) operated by said actuator means with each of said impedances being connected in series with respective one of said switches.

10. A system according to Claim 9 characterised in that each of said switches is a single-pole, single-throw switch (40, 42) and said actuator means includes a drive motor (6), a plurality of drive linkages (7A, 7B) operated by said motor with each one of said linkages operating a respective one of said switches.

11. A system according to Claim 9 characterised in that said energizing means includes a second impedance (44) forming a voltage divider with each of said first mentioned impedances (40, 42) via said connecting link (4), a source of reference voltage (46) arranged to concurrently energize all of said voltage dividers and an output means (B) connected to a common impedance junction of said voltage dividers.

12. A system according to any preceding Claim characterised in that said data transmitting means includes a variable impedance means (50) connected for providing a variable transmitting means output impedance and said actuator means incluoes a motor (6) and a drive linkage (57) connected between said motor and said variable impedance for operating said variable impedance by said motor to produce the variable impedance.

13. A system according to Claim 12 characterised in that said variable impedance means includes a potentiometer (50) and a fixed resistor (54) connected in series with said potentiometer to retain a fixed resistance minimum of said variable output impedance.

## Patentansprüche

1. Zweidraht-Leistungsübertragungs- und Positionssteuervorrichtung mit:
- einer Zentralstation (2), welche
i) eine Stromversorgungseinrichtung für die Lieferung eines aus einer Folge diskreter, im Abstand folgender Impulse bestehenden Versorgungssignals, und
ii) eine Empfangseinrichtung aufweist;
- einer Außenstation (1);
- einer Zweidrahtverbindung (4) zwischen Zentral- und Außenstation;
- Betätigungsmitteln (6, 7, 7A, 7B, 37, 57) mit einem an eine Verstelleinrichtung angeschlossenen Gleichstrommotor in der Außenstation, der als Antwort auf das Versorgungssignal die physikalische Verstellung der Verstelleinrichtung bewirkt;
- einer Datenübertragungseinrichtung (6, 7, 8, 51) in der Außenstation, welche in mechanischer Verbindung mit der Verstelleinrichtung eine elektrische Schaltung aufweist, deren elektrische Eigenschaften von der physikalischen Position der physikalischen Verstelleinrichtung abhängen und die der Übertragung eines Datensignals über die Verbindungsleitung zwischen aufeinanderfolgenden Versorgungssignalimpulsen dient, wobei:
das Datensignal für die gerade vorhandenen elektrischen Eigenschaften der elektrischen Schaltung kennzeichnend ist, die sich aus der von den Betätigungsmitteln bewirkten physikalischen Position der physikalischen Verstelleinrichtung ergeben; und wobei: die Stromversorgungseinrichtung in der Zentralstation den Motor über die Verbindungsleitung periodisch mit Versorgungssignalimpulsen speist und das Datenübertragungssignal zwischen den Versorgungssignalimpulsen periodisch für die physikalische Position kennzeichnende Daten an die Datenempfangseinrichtung überträgt.

2. Vorrichtung nach Anspruch 1, **dadurch gekennzeichnet,** daß die Betätigungsmittel einen Motor (6) sowie ein von diesem betätigtes Antriebsgestänge (7, 7A, 7B, 37, 57) aufweisen.

3. Vorrichtung nach Anspruch 2, **dadurch gekennzeichnet,** daß die Datenübertragungseinrichtung eine Diode (8) sowie einen der Diode parallelgeschalteten Schalter (S1) aufweist, der durch das Gestänge (7, 7A, 7B, 37, 57) betätigt wird.

4. Vorrichtung nach Anspruch 3, **dadurch gekennzeichnet,** daß die Diode (8) der Gegen-EMF des Motors (6) entgegengerichtet gepolt ist und die periodischen Motorversorgungsimpulse von der Versorgungseinrichtung (A, 10) zum Motor hindurchläßt.

5. Vorrichtung nach Anspruch 3 oder 4, **dadurch gekennzeichnet,** daß der Schalter ein einpoliger Schalter (S₁, S₂, S₃) ist.

6. Vorrichtung nach Anspruch 3 oder 4, **dadurch gekennzeichnet,** daß der Schalter ein Drehschalter (30) ist, welcher einen sich über einen vorgegebenen Drehwinkel erstreckenden elektrischen Kontakt aufweist.

7. Vorrichtung nach einem der vorangehenden Ansprüche, **dadurch gekennzeichnet,** daß die Übertragungseinrichtung die Reihenschaltung einer Impedanz (40, 42) mit einem vom Motor betätigten Schalter (S₂, S₃) umfaßt.

8. Vorrichtung nach Anspruch 7, **dadurch gekennzeichnet,** daß die Versorgungseinrichtung eine zweite Impedanz (44) aufweist, welche mit der ersten Impedanz über die Verbindungsleitung (4) einen Reihenspannungsteiler bildet, und ferner eine Bezugsspannungsquelle (46) zur Speisung des Spannungsteilers sowie eine an einen Impedanzanschluß des Reihenspannungsteilers angeschlossene Ausgabeversorgungsklemme (B) aufweist.

9. Vorrichtung nach einem der vorangehenden Ansprüche, **dadurch gekennzeichnet,** daß die Datenübertragungseinrichtung mehrere Impedanzen (40, 42) sowie mehrere von den Betätigungsmitteln gesteuerte Schalter (S₂, S₃) aufweist, wobei jede Impedanz mit einem der Schalter in Reihe geschaltet ist.

10. Vorrichtung nach Anspruch 9, **dadurch gekennzeichnet,** daß jeder Schalter ein einpoliger Schalter (40, 42) ist und die Betätigungsmittel einen Antriebsmotor (6) sowie mehrere vom Motor betätigte Antriebsgestänge (7A, 7B) aufweisen, wobei jedes der Antriebsgestänge einen der Schalter betätigt.

11. Vorrichtung nach Anspruch 9, **dadurch gekennzeichnet**, daß die Versorgungseinrichtung eine zweite Impedanz (44) aufweist, welche mit jeder der ersten Impedanzen über die Verbindungsleitung (40, 42) einen Spannungsteiler bildet, und ferner eine Bezugsspannungsquelle (46) umfaßt, die zugleich alle Spannungsteiler speist, und wobei eine Ausgabevorrichtung (B) an eine gemeinsame Impedanzverbindung der Spannungsteiler angeschlossen ist.

12. Vorrichtung nach einem der vorangehenden Ansprüche, **dadurch gekennzeichnet,** daß die Datenübertragungseinrichtung eine variable Impedanz (50) umfaßt, welche eine variable Übertragungsausgangsimpedanz darstellt, und die Betätigungsmittel einen Motor (6) sowie ein zwischen den Motor und die variable Impedanz eingeschaltetes Antriebsgestänge (57) umfaßt, um die variable Impedanz durch den Motor zu verstellen.

13. Vorrichtung nach Anspruch 12, **dadurch gekennzeichnet**, daß die variable Impedanz ein Potentiometer (50) sowie einen mit ihm in Reihe geschalteten Festwiderstand (54) aufweist, um für die variable Ausgangsimpedanz einen festen Minimalwiderstand aufrechtzuerhalten.

## Revendications

1. Système de commande de puissance et de position à deux fils comprenant :
une station centrale (2) ayant i) des moyens d'excitation pour fournir un signal d'excitation comprenant une série d'impulsions discrètes espacées et ii) des moyens de réception de données,
un poste terminal (1),
une ligne de liaison à deux fils (4) entre ladite station centrale et ledit poste terminal,
des moyens de commande (6, 7, 7A, 7B, 37, 57) comprenant un moteur à courant continu audit poste terminal, relié à un organe de déplacement physique, et provoquant un déplacement physique de celui-ci en réponse au signal d'excitation,
des moyens de transmission de données (6, 7, 8, 51) situés audit poste terminal et comprenant un circuit électrique en liaison mécanique avec lesdits moyens de déplacement physique et dont les caractéristiques électriques dépendent de la position physique des moyens de déplacement physique pour transmettre un signal de données par ladite ligne de liaison entre des impulsions successives dudit signal d'excitation, ledit signal de données étant représentatif des caractéristiques électriques présentes du circuit électrique et résultant de la position physique des moyens de déplacement physique effectuée par lesdits moyens de commande, lesdits moyens d'excitation à ladite station centrale excitant périodiquement ledit moteur avec lesdites impulsions de signal d'excitation appliquées par ladite ligne de liaison et lesdits moyens de transmission de signal de données portant périodiquement des données représentatives de ladite position physique aux moyens de réception de données entre lesdites impulsions de signal d'excitation.

2. Système selon la revendication 1, caractérisé en ce que lesdits moyens de commande comprennent un moteur (6) et une connexion d'entraînement (7, 7A, 7B, 37, 57) actionnée par ledit moteur.

3. Système selon la revendication 2, caractérisé en ce que lesdits moyens de transmission de données comprennent une diode (8) et un commutateur (S1) en parallèle avec ladite diode et actionné par ladite connexion (7, 7A, 7B, 37, 57).

4. Système selon la revendication 3, caractérisé en ce que ladite diode (8) est branchée pour réaliser une force contre-électromotrice dudit moteur (6) tout en laissant passer les impulsions d'excitation périodiques du moteur desdits moyens d'excitation (A, 10) audit moteur.

5. Système selon la revendication 3 ou 4, caractérisé en ce que ledit commutateur est un commutateur unidirectionnel à contact simple (S₁, S₂, S₃).

6. Système selon la revendication 3 ou 4, caractérisé en ce que ledit commutateur est un commutateur rotatif (30) ayant un contact électrique étendu sur un angle de rotation prédéfini.

7. Système selon l'une quelconque des revendications précédentes, caractérisé en ce que les moyens de transmission comprennent un montage en série d'une impédance (40, 42) et d'un commutateur (S₂, S₃) actionné par ledit moteur.

8. Système selon la revendication 7, caractérisé en ce que lesdits moyens d'excitation comprennent une seconde impédance (44) formant un diviseur de tension série avec ladite impédance mentionnée en premier par l'intermédiaire de ladite ligne de liaison (4), une source de tension de référence (46) installée pour exciter ledit diviseur de tension et des moyens de sortie (B) reliés à une jonction d'impédance dudit diviseur de tension série.

9. Système selon l'une quelconque des revendications précédentes, caractérisé en ce que les moyens de transmission de données comprennent une pluralité d'impédances (40, 42) et une pluralité de commutateurs (S₂, S₃) actionnés par lesdits moyens de commande, chacune desdites impédances étant reliée en série respectivement à l'un desdits commutateurs.

10. Système selon la revendication 9, caractérisé en ce que chacun desdits commutateurs est un commutateur unidirectionnel à contact simple (40, 42) et lesdits moyens de commande comprennent un moteur d'entraînement (6), une pluralité de liaisons d'entraînement (7A, 7B) actionnées par ledit moteur, chacune desdites liaisons actionnant respectivement l'un desdits commutateurs.

11. Système selon la revendication 9, caractérisé en ce que lesdits moyens d'excitation comprennent une seconde impédance (44) formant un diviseur de tension avec chacune des impédances (40, 42) mentionnées en premier par l'intermédiaire de ladite ligne de liaison (4), une source de tension de référence (46) installée pour exciter simultanément tous lesdits diviseurs de tension, et des moyens de sortie (B) reliés à une jonction d'impédance commune auxdits diviseurs de tension.

12. Système selon l'une quelconque des revendications précédentes, caractérisé en ce que lesdits moyens de transmission de données comprennent des moyens d'impédance variable (50) connectés pour fournir une impédance de sortie variable des moyens de transmission et lesdits moyens de commande comprennent un moteur (6) et une connexion d'entraînement (57) connectée entre ledit moteur et ladite impédance variable pour faire actionner ladite impédance variable par ledit moteur pour produire l'impédance variable.

13. Système selon la revendication 12, caractérisé en ce que lesdits moyens d'impédance variable comprennent un potentiomètre (50) et une résistance fixe (54) couplée en série audit potentiomètre pour retenir une résistance fixée minimum de ladite impédance de sortie variable.
